Europäisches Patentamt

European Patent Office

Office européen des brevets

(11) Veröffentlichungsnummer : **0 059 229**
**B1**

(12) EUROPÄISCHE PATENTSCHRIFT

(45) Veröffentlichungstag der Patentschrift :
26.09.84

(51) Int. Cl.³ : **H 01 S  3/03, H 01 S  3/097**

(21) Anmeldenummer : 81101440.6

(22) Anmeldetag : 27.02.81

(54) Verfahren und Vorrichtung zum Betreiben eines Gaslasers.

(43) Veröffentlichungstag der Anmeldung :
08.09.82 Patentblatt 82/36

(45) Bekanntmachung des Hinweises auf die Patenterteilung : 26.09.84 Patentblatt 84/39

(84) Benannte Vertragsstaaten :
BE CH DE FR GB IT LI NL SE

(56) Entgegenhaltungen :
EP-A- 0 011 679
DE-A- 2 050 309
FR-A- 2 086 023
FR-A- 2 096 664
US-A- 3 936 772

(73) Patentinhaber : **ELTRO GmbH Gesellschaft für**
**Strahlungstechnik**
**Kurpfalzring 106 Postfach 10 21 20**
**D-6900 Heidelberg 1 (DE)**

(72) Erfinder : **Karning, Heinrich**
**Albert-Fritz-Strasse 6**
**D-6900 Heidelberg (DE)**
Erfinder : **Prein, Franz**
**Tulpenweg 3**
**D-6901 Waldhilsbach (DE)**
Erfinder : **Vierling, Karl-Heinz**
**Johann-Sebastian-Bach-Strasse 46**
**D-6901 Bammental (DE)**

(74) Vertreter : **Muschka, Wilhelm, Dipl.-Ing.**
**Eltro GmbH Gesellschaft für Strahlungstechnik Kurp-**
**falzring 106 Postfach 10 21 20**
**D-6900 Heidelberg 1 (DE)**

**Beschreibung**

Die Erfindung betrifft ein Verfahren zum Betreiben eines Gaslasers, dessen Entladungen über gegebenenfalls auch mit Temperaturänderungen verbundene Druckänderungen der Lasergases im Entladungsraum eine Bewegung des Lasergases innerhalb des Lasergehäuses erzeugen.

Ein solches Verfahren ist aus FR-A-2 086 023 bekannt, wobei jedoch ein Hinweis darauf fehlt, wie man gegebenenfalls einen gerichteten Gasströmungskreislauf erhält.

Die Aufgabe der Erfindung wird darin gesehen, für das gattungsgemäße Verfahren einen gerichteten Gastransport auf quasi passive Art zu bewerkstelligen. Diese Aufgabe wird erfindungsgemäß dadurch gelöst, daß mindestens ein vom Entladungsraum separiertes Gasreservoir mit einem Entladungsraum über Verbindungsleitungen derart strömungsmäßig verbunden wird, daß eine Gasströmung den Entladungsraum durchsetzen kann, daß jede Verbindungsleitung in entgegengesetzten Richtungen einen unterschiedlichen Strömungswiderstand aufweist und der maximale Strömungswiderstand .mindestens einer Verbindungsleitung in entgegengesetzter Richtung angeordnet wird wie derjenige der anderen Verbindungsleitungen, derart, daß im Anschluß an eine durch eine Gasentladung verursachte Druckerhöhung im Entladungsraum über mindestens eine der Verbindungsleitungen Lasergas aus dem Entladungsraum in das Gasreservoir fließt, und daß im Anschluß daran eine Druckdifferenz zwischen dem Gasreservoir und dem Entladungsraum benutzt wird, um über mindestens eine andere Verbindungsleitung Lasergas aus dem Gasreservoir in den Entladungsraum zurückfließen zu lassen, damit insgesamt ein das Gasreservoir und den Entladungsraum durchsetzender Strömungskreislauf entsteht.

Was die Anregungsmechanismen anbetrifft, so hat es sich in der Praxis als sinnvoll erwiesen, daß die mit der Gasentladung verbundene Druckerhöhung entweder mit Hilfe eines Elektrodensystems mit gestrecktem oder gefaltetem Strahlengang oder mit Hilfe einer kapazitiven oder induktiven Radiofrequenz-Einkopplung erzeugt wird.

Eine Weiterbildung der Erfindung sieht vor, daß der Entladungsraum und die Gasreservoire in einem Gehäuse integriert oder auf zwei oder mehrere — mit oder ohne gegenseitigen Abstand installierte — Gehäuseeinheiten verteilt ein bis auf die Spannungszufuhr und die Ein- bzw. Auskopplung des Laserstrahls völlig abgeschlossenes System bilden. Zweckmäßigerweise bestehen hierbei die Verbindungsleitungen aus Düsen, Ventilen, Membranen oder Kombinationen dieser Möglichkeiten.

Um die bei allen Lasern auftretende Verlustenergie — sie liegt bei 80 bis fast 100 % der aufgewendeten Energie — abführen zu können, sind zum sicheren Dauerbetrieb insbesondere bei Lasern höherer Energie und/oder Pulsfolgefrequenz ein schneller Gasaustausch und eine gute Kühlung erforderlich. Unter diesem Blickwinkel ist es von Vorteil, daß die Innenoberfläche mindestens eines Gasreservoirs möglichst groß, z. B. mäanderlinienförmig verlaufend und/oder mit sich in Längsrichtung erstreckenden Kühlrippen ausgebildet ist. Von Bedeutung kann es ferner sein, wenn entweder eine der Wände des Gasreservoirs und/oder des Entladungsraums wärmemäßig unterschiedlich zur anderen Hälfte isoliert ist oder aber, daß das Gehäuse oder Gehäuseteile des Gasreservoirs aus einem die Wärme unterschiedlich zum Entladungsraum ableitendem Material bestehen oder aber in zumindest einem Gasreservoir eine Heizung oder ein beheizter Katalysator vorgesehen ist. Um mit einem Zahlenbeispiel zu verdeutlichen, was die Berücksichtigung dieser Maßnahmen bewirkt, sei erwähnt, daß z. B. mit einem Laser, dessen Entladevolumen ca. 20 cm$^3$ beträgt und der z. B. mit 3 Joule gepumpt wird, eine Pulsfolgefrequenz von 2 bis 3 Hz erreicht werden kann, während mit Anwendung des Gastransports die Pulsfolgefrequenz um Faktoren höher sein kann. Will man entweder die Energie oder die Pulsfolge steigern, so sind Einrichtungen der hier beschriebenen Art unerläßlich.

Bei den geschilderten Vorgängen fallen insbesondere die Dissoziationsprodukte von $CO_2$ und $N_2$ an. Um dieselben wieder in die Ausgangsverbindung zurückführen zu können, ist es von Vorteil, daß die Innenoberflächen mindestens eines Gasreservoirs mit einem Katalysator ausgekleidet sind und/oder der Katalysator das Volumen dieses Gasreservoirs füllt. Er kann z. B. aus Platin oder aus einer Mangandioxid-Kupferoxydul-Verbindung bestehen.

Zum Zwecke der Gasreinigung kann es nach einer weiteren Ausführungsart Erfindung zweckmäßig sein, daß in den Strömungsverlauf — z. B. elektrostatische — Reinigungsfilter, Kühlfallen und/oder elektrische Filter eingebaut sind.

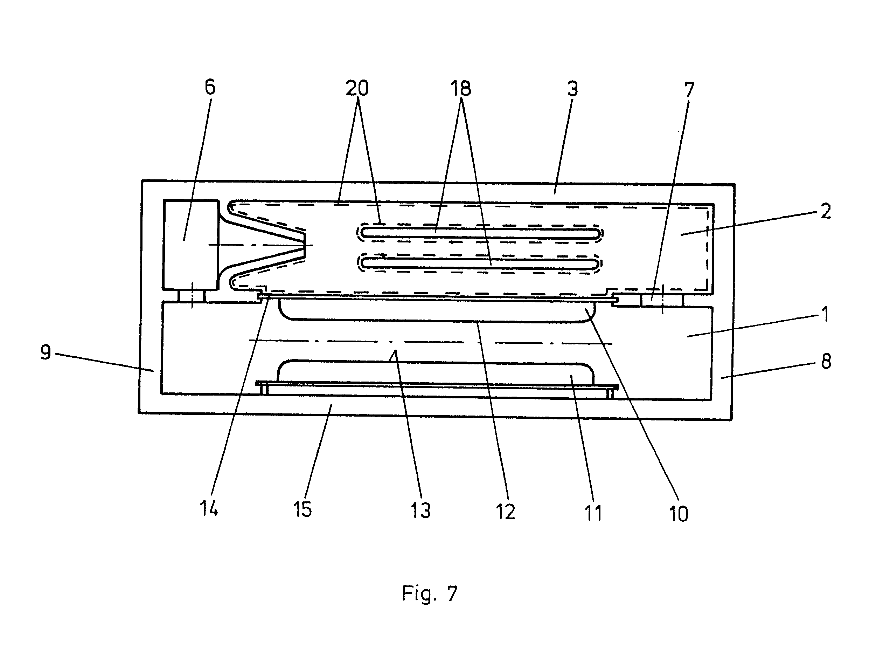

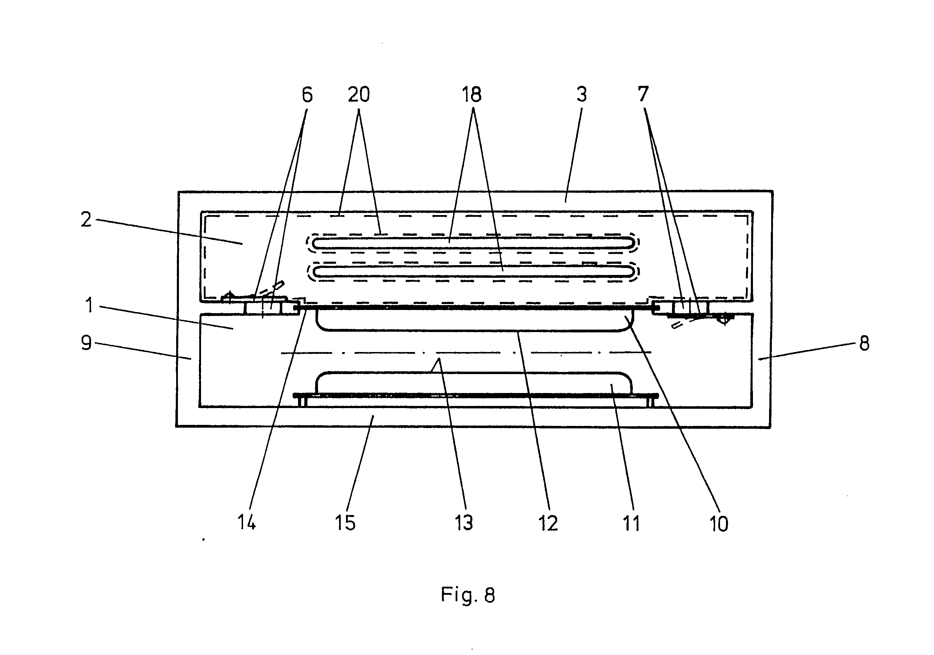

Im folgenden werden an Hand einer Zeichnung in den Fig. 7 und 8 Ausführungsbeispiele der Erfindung näher erläutert. Die weiteren Figuren dienen zur Verdeutlichung spezieller weiterer Ausgestaltungen der Erfindung, wobei die in den einzelnen Figuren einander entsprechenden Teile dieselben Bezugzeichen aufweisen. Es zeigt :

Figur 1   ein für den Entladungsraum und das Gasreservoir gemeinsames Gehäuse, mit Verbindungsleitungen zwischen beiden Räumen — im Längsschnitt,

Figur 2   eine Anordnung gemäß Fig. 1, bei der jedoch jeder Raum von einem separaten Gehäuse umgeben ist,

Figur 3   eine Anordnung gemäß Fig. 1 mit einer Radiofrequenz-Anregung zwischen zwei als metallische oder dielektrische Elektroden ausgebildeten Gehäusewänden,

Figur 4   eine Anordnung gemäß Fig. 3 mit kapazitiver Radiofrequenz-Einkopplung,

Figur 5   eine Anordnung gemäß Fig. 4, jedoch mit induktiver Radiofrequenz-Einkopplung,

Figur 6   eine Anordnung im wesentlichen gemäß Fig. 1 mit einem Elektrodensystem, das quer zur Hauptachse angeregt wird,

Figur 7 eine erfindungsgemäße Anordnung im wesentlichen nach Fig. 6 mit einer reservoirseitig in einen Strömungskanal übergehenden Verbindungsleitung,

Figur 8 eine erfindungsgemäße Anordnung im wesentlichen nach Fig. 6 mit einer die Verbindungsleitungen abdeckenden und bedarfsweise freigebenden Membran,

Figur 9 eine Anordnung, die im wesentlichen aus einer Kombination der Fig. 1 und 6 besteht — mit einer mäanderlinienförmig ausgebildeten Innenfläche Innenfläche des Gasreservoirs,

Figur 10 eine Anordnung im wesentlichen gemäß Fig. 2 oder 9 mit Brewsterfenstern in dem Entladungsraum und außenseitigen Kühlrippen bei dem Gasreservoir,

Figur 11 eine Anordnung im wesentlichen gemäß Fig. 6, jedoch mit einem sich entlang der Hauptachse entladenden Elektrodensystem,

Figur 12 eine Anordnung im wesentlichen gemäß den Fig. 6 bis 8, jedoch mit zwei Gasreservoiren und

Figur 13 die allgemeinste Form der Erfindung mit nur einem Gehäuse und nur einem Gasreservoir.

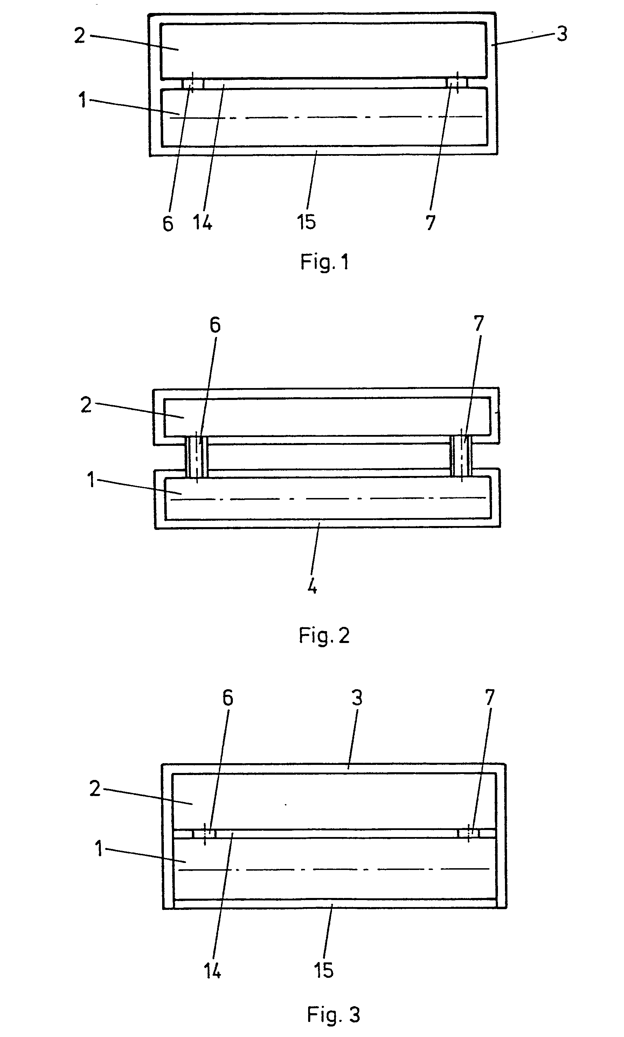

Mit 1 ist in den Fig. 1 und 2 jeweils der Entladungsraum eines beliebig angeregten und sich elektrisch entladenden Gaslasers und mit 2 ein ihm benachbartes Gasreservoir bezeichnet. Im Fall der Fig. 1 sind beide Räume in das gemeinsame Gehäuse 3 integriert, im Fall der Fig. 2 dagegen ist jeder Raum von einem separaten Gehäuse 4 bzw. 5 umgeben. Die beiden Gehäuse können mit oder auch ohne Abstand nebeneinderliegend angeordnet sein.

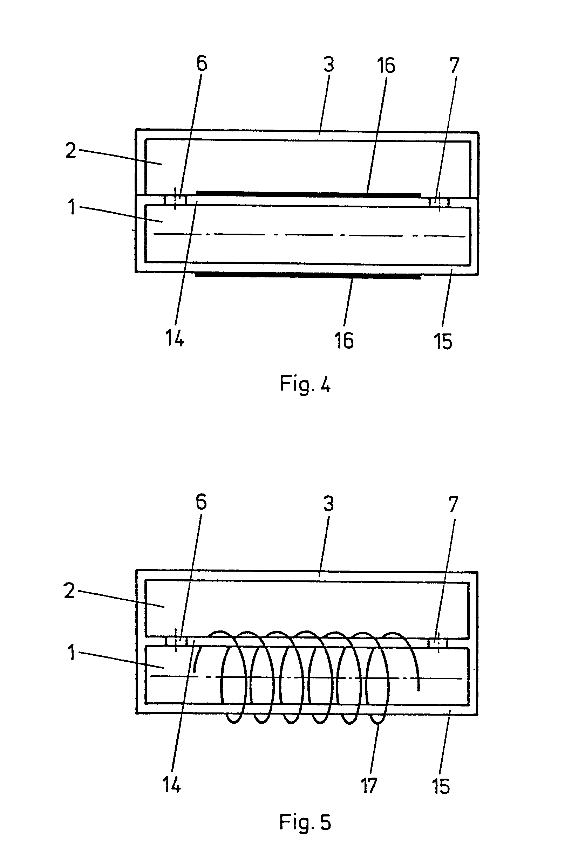

Der konstruktive Aufbau der Anordnung in Fig. 3 entspricht demjenigen von Fig. 1, wenn man von den Materialien der die beiden Räume trennenden Wand 14 und der ihr in dem Entladungsraum gegenüberliegenden Außenwand 15 absieht. Diese Wände bestehen aus Metall und dienen als Elektroden, die über eine Radio-bzw. Hochfrequenz angeregt werden. Die Fig. 4 und 5 unterscheiden sich hiervon lediglich dadurch, daß bei ersterer die beiden Wände 14 und 15 aus je einem außenseitig mit einem elektrischen Leiter 16 beschichteten Dielektrikum bestehen und die Anregung über eine kapazitive Radiofrequenz-Einkopplung erfolgt — auch eine pulsförmige Anregung ist hier möglich. Bei der Ausführungsform der Fig. 5 dagegen über eine induktive Radiofrequenz-Einkopplung erfolgt.

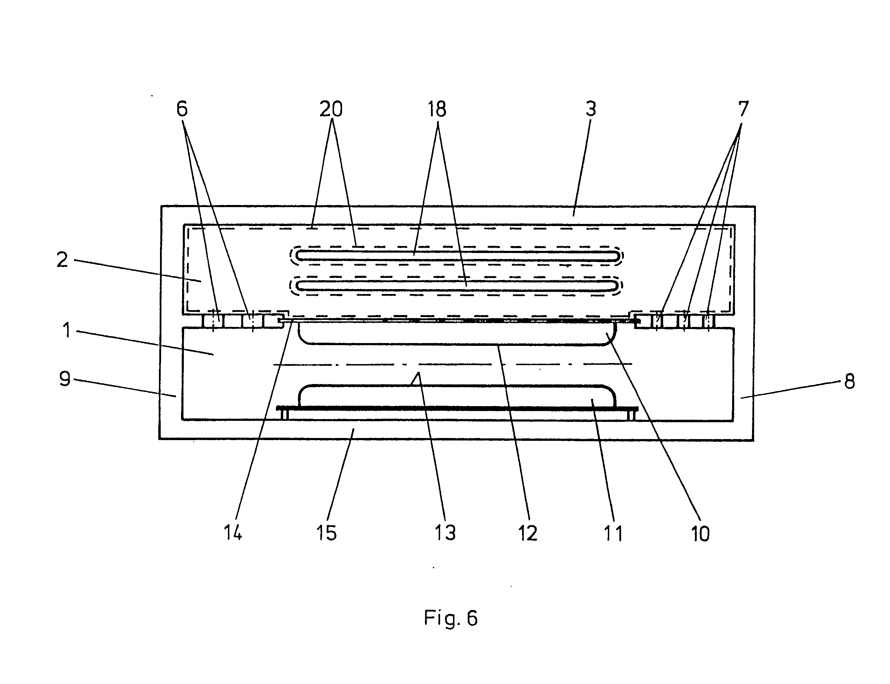

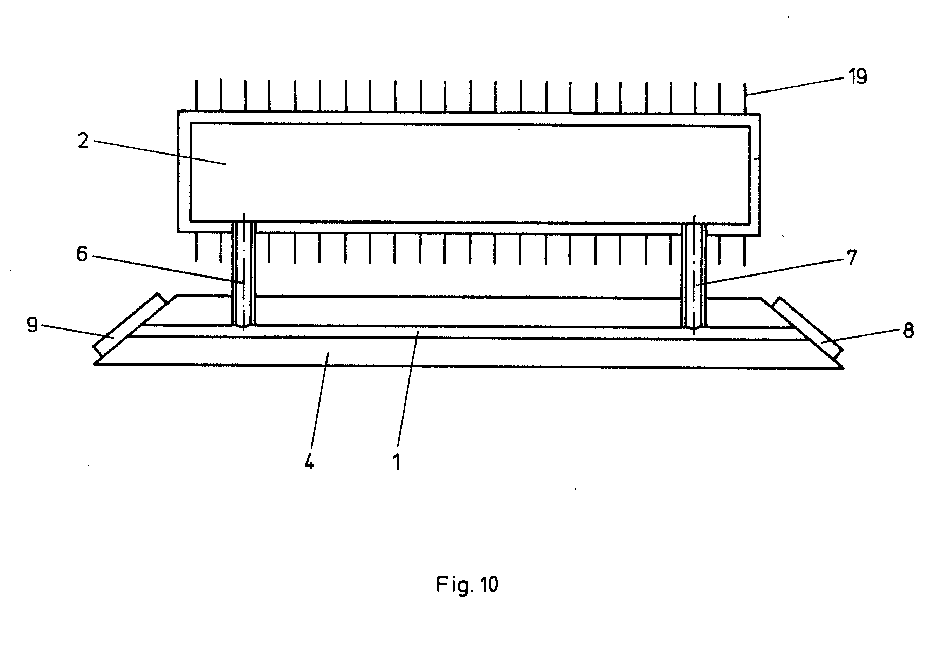

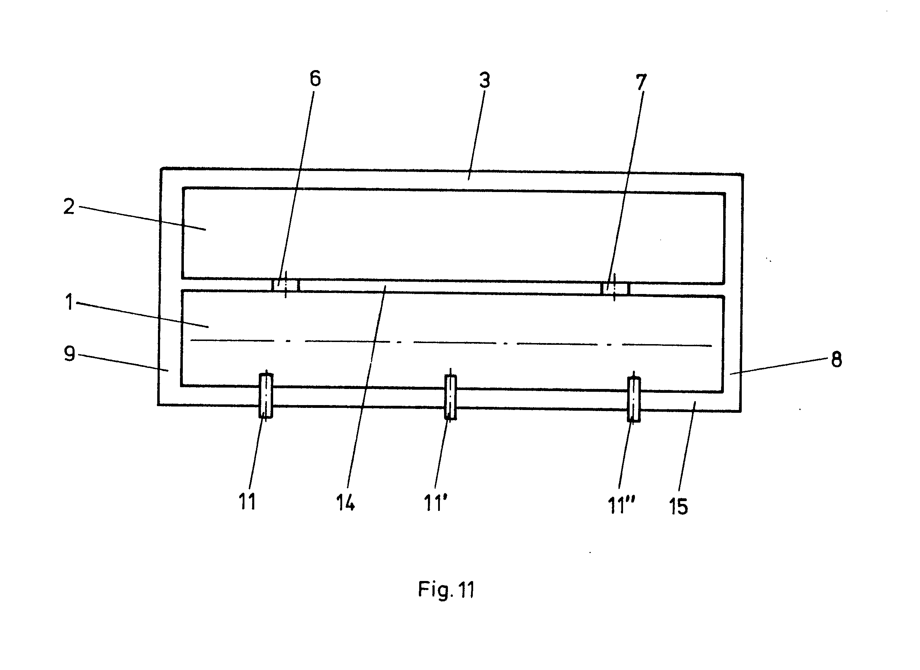

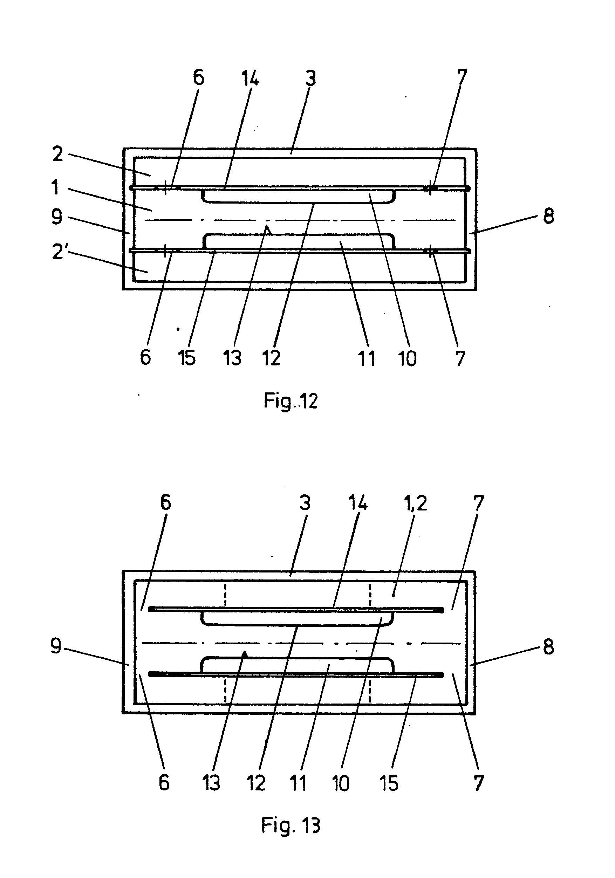

Eine Anregung mit Hilfe herkömmlicher Elektrodensysteme zeigen die Fig. 6 bis 13, die aus Vereinfachungsgründen jeweils mit einem gestreckten Strahlengang gezeichnet sind. Selbstverständlich sind bei anderen, zeichnerisch nicht dargestellten Ausführungsbeispielen auch Elektrodenkonfigurationen mit gefaltetem Strahlengang denkbar. Die Anordnungen der Fig. 6 bis 9 und 12, 13 enthalten ein sich entlang der Längsachse erstreckendes Elektrodensystem 10 bis 13 mit je einer Elektrode 10 und 11 und je einer Entladungsfläche 12 bzw. 13, die an den einander gegenüberliegenden Längswänden 14 und 15 des Entladungsraumes 1 befestigt oder in diesen Wänden integriert sind. Die in den Freiräumen zwischen den Elektroden an den Wänden 8 und 9 innenseitig befestigen oder in den Wänden eingelassenen, teils reflektierenden teils (teil-)durchlässigen optischen Elemente blieben ebenso wie die Hochspannungszuführung — weil bekannt — in der Zeichnung unberücksichtigt. Die für die Strahlung durchlässigen optischen Elemente können auch — wie in Fig. 10 angedeutet — aus Brewsterfenstern bestehen. Fig. 11 zeigt außerdem die Besonderheit, daß die Elektroden 11, 11′ und 11″ quer zur Längsachse des Gehäuses 5 verlaufend in der Wand 15 eingelassen sind. Ihre Entladung vollzieht sich in Richtung der Längsachse. Sofern diesen Elektroden in der Wand 14 weitere Elektroden gegenüberliegen — was hier aus Vereinfachungsgründen gleichfalls nicht dargestellt ist —, erhält man wieder einen gefalteten Strahlengang. Fig. 12 zeigt darüberhinaus die Möglichkeit, daß neben dem Gasreservoir 2 auch noch ein weiteres Gasreservoir 2′ vorgesehen sein kann. Selbstverständlich sind auch mehrere solcher Räume oder auch nur ein einziger Raum — wie in Fig. 13 als allgemeinste Ausführungsform dargestellt — denkbar, wobei die Strömungsrichtung jeweils durch entsprechend unterschiedlich ausgebildete Leitungen 6 bis 7′ erzeugt wird, was aus den Fig. 6, 7, 8, 12 und 13 ersichtlich ist. Die gestrichelten Linien deuten die Halterungen der Elektroden — beispielsweise an der Decke und am Boden der Gasreservoire an. Die Längswände 14, 15 sind hier zu bloßen Elektrodenauflagen zusammengeschrumpft. Von diesem Beispiel abweichend, können eine oder mehrere Räume bzw. Reservoire — etwa gemäß Fig. 2 — auch auf verschiedene Gehäuse aufgeteilt sein.

Entladungsraum und Gasreservoir aller Ausführungsbeispiele sind in ihren Endbereichen über je eine Leitung 6 bzw. 7 miteinander verbunden. Diese Verbindungsleitungen können konstruktiv in den verschiedensten Formen — jeweils den speziellen Gegebenheiten angepaßt — ausgebildet sein. So eignet sich z. B. für Membranen gemäß Ausführungsbeispiel Fig. 8 und einfache Wandaussparungen gemäß Fig. 1, 3 bis 5 und 11 eher die eingehäusige Version. Die in Fig. 8 dargestellten Membranen sind einmal mit ausgezogener Linie dargestellt. In diesem Zustand verschließen sie das Lochsystem. In der gestrichelt gezeichneten Lage dagegen sind die Lochsysteme für den Gasdurchtritt geöffnet. Auch Mischformen etwa gemäß Fig. 7 sind denkbar, wo auf der in Blickrichtung linken Seite eine Düse oder ein Strömungskanal und auf der anderen Seite ein Loch vorgesehen ist. Eine andere Mischform ist aus Fig. 6 ersichtlich, wo die Wand 14 auf der einen Seite von zwei und auf der anderen von drei Löchern perforiert ist. Wenn hierbei die Strömungswiderstände in beiden Richtungen durch verschiedene Anzahl und/oder verschiedene Querschnittsgrößen der Leitungen unterschiedlich ausgelegt sind, ergibt sich daraus eine gerichtete Durchströmung von Entladungsraum und Gasreservoir. Wenn nun ein Pumpvorgang bzw. eine Besetzungsinversion durchgeführt wird, entsteht in dem Entladungsraum 1 infolge der elektrischen Entladung eine Druck- und — in geringerem Umfang — auch eine Temperaturveränderung, und zwar im wesentlichen in Abhängigkeit von der zugeführten Energie und/oder der Geometrie von Entladungsraum und Gasreservoir und/oder dem Material dieser Räume. Die bis zu einigen 130 mbar (hundert Torr) betragenden Druckspitzen können unter den beschriebenen Voraussetzungen zum Gastransport herangezogen werden. Bei diesem Vorgang ist zunächst die Leitung 7 geschlossen, wie dies z. B. aus Fig. 8 durch die in verschiedenen Betriebszuständen gezeichnete Membran besonders deutlich hervorgeht. Die nur nach der Innenseite des Entladungsraums 1 zu öffnende Membran läßt sich bei erhöhtem Druck innerhalb dieses Raums nicht öffnen, sondern wird sogar noch fester gegen die Wand 14 gepreßt — ausgezogene Linienführung. Demgegenüber läßt sich die Membran 6 nur nach der Innenseite des Gasreservoirs 2 öffnen. Diese zunächst ebenfalls geschlossene Membran 6 wird sich bei erhöhtem Druck im Entladungsraum 1 öffnen, d. h. von der mit ausgezogener Linienführung gezeichneten Lage in diejenige mit gestrichelter Linienführung verschieben, um Gas bis zum Druckausgleich hindurchzulassen. Der Druckausgleich sowie ein hiernach im Entladungsraum 1 entstehender geringfügiger Unterdruck läßt jetzt die Membran 6 wieder in ihre Ausgangslage — ausgezogene Linienführung — zurückkehren und öffnet etwa gleichzeitig die Membran 7 bzw. bewirkt ein Verschieben derselben von der in ausgezogener Linienführung dargestellten Lage in diejenige mit gestrichelter Linienführung dargestellte, damit der Gasstrom wieder nach dem Entladungsraum 1 zurückfließen kann. Dieses Prinzip funktioniert grundsätzlich bei allen dargestellten und beschriebenen Varianten, wobei anstelle eines Schließens und Öffnens der Leitungen auch durch die unterschiedlichen Querschnittsgrößen der beiden Leitungen 6 und 7 (Fig. 6) oder entsprechend geformte Düsen bzw. Strömungskanäle (Fig. 7) die Richtung des Stromflusses vorgegeben werden kann.

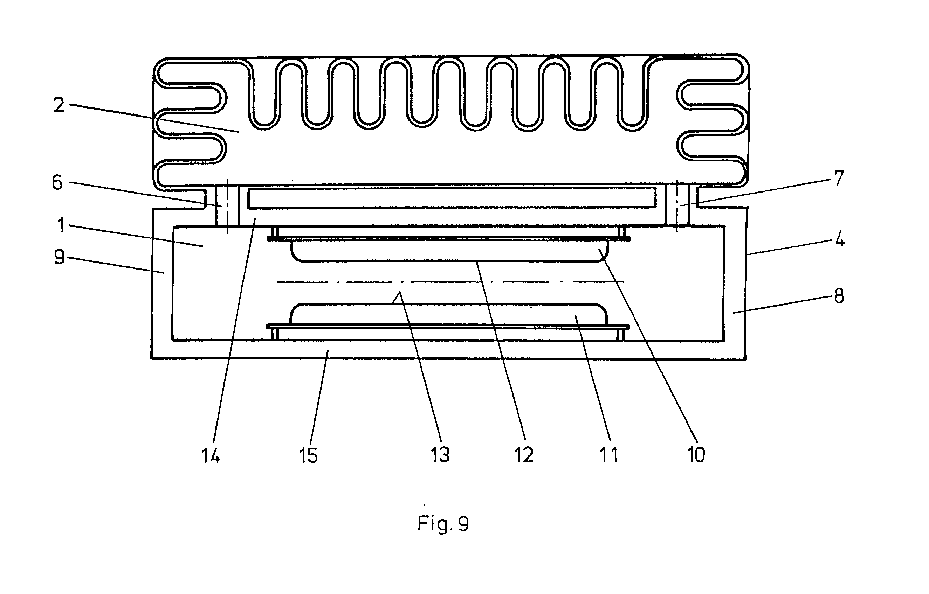

Verschiedene Hilfsmittel, wie z. B. ein beschleunigtes Abkühlen des durch die plötzliche Druckerhöhung erhitzten Gases, beeinflussen den Gastransport günstig. Hierzu zählt u. a. eine Vergrößerung der Innenoberfläche des Gasreservoirs 2. Dies wird beispielsweise durch eine mäanderlinienförmige Ausbildung der Innenoberfläche (Fig. 9) und/oder durch Kühlrippen 18 bzw. 19 (Fig. 6, 7, 8 und 10) erreicht. Bei innenseitig vorgesehenen Kühlrippen 18, etwa gemäß der Version der Fig. 6 bis 8, werden die Rippen in Richtung des Gasstroms verlaufend angeordnet, während sie außenseitig, etwa gemäß der Version von Fig. 10, auch quer zur Transportrichtung verlaufen können. Zusätzlich oder alternativ können beide Räume oder ihre — in Blickrichtung — rechten und linken Hälften unterschiedlich wärmeisoliert sein oder auch aus unterschiedlich wärmeleitendem Material bestehen, was ebenfalls zur Beschleunigung des Gastransports beiträgt. Eine weitere Möglichkeit diesen Vorgang zu beeinflussen besteht darin, daß wenigstens in einer der Räume eine Heizung vorgesehen ist.

In den Fig. 6 bis 8 ist noch angedeutet, daß die Oberflächen des Gasreservoirs 2 mit einem Katalysator 20, z. B. aus Platin oder einer Mangandioxid-Kupferoxydul-Verbindung, ausgekleidet sein können ; bei einem anderen, zeichnerisch nicht dargestellten Ausführungsbeispiel kann ein solcher Katalysator zusätzlich oder alternativ auch das gesamte Volumen dieses Reservoirs füllen.

## Ansprüche

1. Verfahren zum Betreiben eines Gaslasers, dessen Entladungen über ggf. auch mit Temperaturänderungen verbundene Druckänderungen des Lasergases im Entladungsraum eine Bewegung des Lasergases innerhalb des Lasergehäuses erzeugen, dadurch gekennzeichnet, daß mindestens ein vom Entladungsraum separiertes Gasreservoir (2) mit einem Entladungsraum (1) über Verbindungsleitungen (6, 7) derart strömungsmäßig verbunden wird, daß eine Gasströmung den Entladungsraum durchsetzen kann, daß jede Verbindungsleitung (6, 7) in entgegengesetzten Richtungen einen unterschiedlichen Strömungswiderstand aufweist und der maximale Strömungswiderstand mindestens einer Verbindungsleitung in entgegengesetzter Richtung angeordnet wird wie derjenige der anderen Verbindungsleitungen, derart, daß im Anschluß an eine durch eine Gasentladung verursachte Druckerhöhung im Entladungsraum über mindestens eine der Verbindungsleitungen Lasergas aus dem Entladungsraum in das Gasreservoir fließt, und daß im Anschluß daran eine Druckdifferenz zwischen dem Gasreservoir und dem Entladungsraum benutzt wird, um über mindestens eine andere Verbindungsleitung Lasergas aus dem Gasreservoir in den Entladungsraum zurückfließen zu lassen, damit insgesamt ein das Gasreservoir und den Entladungsraum durchsetzender gerichteter Strömungskreislauf entsteht.

2. Verfahren nach Anspruch 1, dadurch gekennzeichnet, daß die mit der Gasentladung verbundene Druckerhöhung entweder mit Hilfe eines Elektrodensystems (10 bis 13) mit gestrecktem oder gefaltetem Strahlengang oder aber mit Hilfe einer kapazitiven oder induktiven Radiofrequenz-Einkopplung erzeugt wird.

3. Vorrichtung zur Durchführung des Verfahrens nach einem der vorausgehenden Ansprüche, dadurch gekennzeichnet, daß der Entladungsraum und die Gasreservoire (1 ; 2) entweder in einem Gehäuse (3) integriert oder auf zwei oder mehrere — mit oder ohne gegenseitigen Abstand installierte — Gehäuseeinheiten (4 ; 5) verteilt ein bis auf die Spannungszufuhr und die Ein- bzw. Auskopplung des Laserstrahls völlig abgeschlossenes System bilden.

4. Vorrichtung nach Anspruch 3, dadurch gekennzeichnet, daß die Verbindungsleitungen (6 ; 7) aus Düsen, Ventilen, Membranen oder Kombinationen dieser Möglichkeiten bestehen.

5. Vorrichtung nach einem der vorausgehenden Ansprüche dadurch gekennzeichnet, daß entweder eine Halfte der Wände des Gasreservoirs und/oder des Entladungsraums wärmemäßig unterschiedlich zur anderen Hälfte isoliert ist oder aber, daß das Gehäuse oder Gehäuseteile des Gasreservoirs aus einem die Wärme unterschiedlich zum Entladungsraum ableitendem Material bestehen.

6. Vorrichtung nach einem der vorausgehenden Ansprüche, dadurch gekennzeichnet, daß in zumindest einem Gasreservoir eine Heizung oder ein beheizter Katalysator vorgesehen ist.

7. Vorrichtung nach einem der vorausgehenden Ansprüche, dadurch gekennzeichnet, daß die Innenoberfläche mindestens eines Gasreservoirs (2) mäanderlinienförmig verlaufend und/oder mit sich in Längsrichtung erstreckenden Kühlrippen (18 ; 19) ausgebildet ist (Fig. 9).

8. Vorrichtung nach Anspruch 7, dadurch gekennzeichnet, daß das Gehäuse (5) oder der Gehäusebereich des Gasreservoirs (2) außenseitig mit — vorzugsweise quer zur Längsachse verlaufenden — Kühlrippen (19) versehen ist.

9. Vorrichtung nach einem der vorausgehenden Ansprüche, dadurch gekennzeichnet, daß die Innenoberflächen mindestens eines Gasreservoirs (2) mit einem Katalysator (20) ausgekleidet sind und/oder der Katalysator das Volumen dieses Gasreservoirs füllt.

10. Vorrichtung nach Anspruch 9, dadurch gekennzeichnet, daß der Katalysator (20) aus Platin oder aus einer Mangandioxid-Kupferoxydul-Verbindung besteht.

11. Vorrichtung nach einem der vorausgehenden Ansprüche, dadurch gekennzeichnet, daß in den Strömungsverlauf — z. B. elektrostatische — Reinigungsfilter, Kühlfallen und/oder elektrische Filter eingebaut sind.

**Claims**

1. A method of operating a gas laser in which the discharges thereof produce a movement of the laser gas inside the laser housing by way of pressure changes in the laser gas inside the discharge chamber possibly also associated with temperature changes, characterised in that at least one gas reservoir (2) separated from the discharge chamber is in communication with a discharge chamber (1) by way of connecting ducts (6, 7) so that a stream of gas can pass through the discharge chamber, in that each connecting duct (6, 7) has different flow resistances in opposite directions, and the maximum flow resistance of at least one connecting duct is arranged in the opposite direction to that of the other connecting ducts so that, subsequent to a pressure increase in the discharge chamber caused by a gas discharge, laser gas flows from the discharge chamber into the gas reservoir through at least one of the connecting ducts, and in that subsequently thereto a pressure difference between the gas reservoir and the discharge chamber is used to enable laser gas to flow back into the discharge chamber from the gas reservoir through at least one other connecting duct so that a resultant directional circulation through the gas reservoir and the discharge chamber is produced.

2. A method according to claim 1, characterised in that the pressure increase associated with the gas discharge is produced either by means of an electrode system (10 to 13) with an elongated or folded beam path or by means of a capacitive or inductive radio frequency coupling.

3. Apparatus for carrying out the method according to one of the preceding claims, characterised in that the discharge chamber and the gas reservoirs (1 ; 2) are either integrated in one housing (3) or distributed over two or more housing units (4 ; 5), installed with or without space between them, to form a completely self-contained system with the exception of the voltage supply and the coupling in and coupling out of the laser beam.

4. Apparatus according to claim 3, characterised in that the connecting ducts (6 ; 7) comprise nozzles, valves, membranes or combinations of these possibilities.

5. Apparatus according to one of the preceding claims, characterised in that either one half of the walls of the gas reservoir and/or of the discharge chamber is thermally insulated differently from the other half or the housing or housing parts of the gas reservoir comprise a material of different thermal conductivity from the discharge chamber.

6. Apparatus according to one of the preceding claims, characterised in that a heating means or a heated catalyst is provided in at least one gas reservoir.

7. Apparatus according to one of the preceding claims, characterised in that the internal surface of at least one gas reservoir (2) is formed with a meandering course and/or constructed with cooling ribs (18 ; 19) extending in the longitudinal direction (Figure 9).

8. Apparatus according to claim 7, characterised in that the housing (5) or the housing region of the gas reservoir (2) is equipped externally with cooling ribs (19), preferably extending transversely to the longitudinal axis.

9. Apparatus according to one of the preceding claims, characterised in that the internal surfaces of at least one gas reservoir (2) are lined with a catalyst (20) and/or the catalyst fills the volume of this gas reservoir.

10. Apparatus according to claim 9, characterised in that the catalyst (20) consists of platinum or of a manganese dioxide/cuprous oxide compound.

11. Apparatus according to one of the preceding claims, characterised in that electric filters, cooling traps and/or cleansing filters, e. g. of an electrostatic nature, are built into the path of flow.

**Revendications**

1. Procédé d'utilisation d'un laser à gaz dont les décharges produisent un déplacement du gaz à l'intérieur de l'enveloppe du laser au moyen de variations de pression qui, le cas échéant, sont liées aussi à des variations de température, caractérisé en ce qu'au moins un réservoir de gaz (2) séparé de la chambre de décharge est relié à une chambre de décharge (1), par des conduites de liaison (6, 7), pour ce qui est de l'écoulement, de telle façon qu'un écoulement de gaz puisse traverser la chambre de décharge (1), en ce que chacune des conduites de liaison (6, 7) présente une résistance à l'écoulement différente dans les sens opposés et que la résistance maximale à l'écoulement d'au moins une conduite de liaison est placée en sens opposé de celui des autres conduites de liaison, de telle façon que, à la suite d'une augmentation de pression causée dans la chambre de décharge (1) par une décharge dans le gaz, du gaz passe de la chambre de décharge (1) dans le réservoir de gaz (2) par au moins l'une des conduites de liaison et que, à la suite de cela, une différence de pression entre le réservoir de gaz (2) et la chambre de décharge (1) soit utilisée pour faire revenir du gaz du réservoir de gaz (2) dans la chambre de décharge (1) par au moins une autre conduite de liaison afin que prenne naissance, au total, un circuit d'écoulement orienté qui traverse le réservoir de gaz (2) et la chambre de décharge (1).

2. Procédé selon la revendication 1, caractérisé en ce que l'augmentation de pression liée à la décharge dans le gaz est produite soit à l'aide d'un système d'électrodes (10 à 13) avec un parcours rectiligne ou brisé du faisceau, soit à l'aide d'un couplage haute fréquence capacitif ou inductif.

3. Dispositif d'application du procédé selon l'une des revendications précédentes, caractérisé en ce que la chambre de décharge et les réservoirs de gaz (1, 2) sont soit intégrés dans une enveloppe (3), soit constituent un système complet réparti entre deux unités d'enveloppe (4, 5) ou davantage — installées avec ou sans intervalles entre elles — à l'exception de l'alimentation en tension et du couplage et du découplage du faisceau laser.

4. Dispositif selon la revendication 3, caractérisé en ce que les conduites de liaison (6, 7) sont constituées par des buses, des vannes, des membranes ou des combinaisons de ces possibilités.

5. Dispositif selon l'une des revendications précédentes, caractérisé en ce que soit une moitié des parois du réservoir de gaz (2) et/ou de la chambre de décharge (1) a une isolation thermique différant de celle de l'autre moitié, soit l'enveloppe ou des éléments d'enveloppe du réservoir de gaz (2) sont faits d'une matière qui évacue la chaleur de façon différente vers la chambre de décharge (1).

6. Dispositif selon l'une des revendications précédentes, caractérisé en ce que, dans au moins un réservoir de gaz, il y a un système de chauffage ou un catalyseur chauffé.

7. Dispositif selon l'une des revendications précédentes, caractérisé en ce que la surface intérieure d'au moins un réservoir de gaz (2) forme des méandres et/ou est pourvue d'ailettes de refroidissement (18, 19) longitudinales (Fig. 9).

8. Dispositif selon la revendication 7, caractérisé en ce que l'enveloppe (5) ou la partie d'enveloppe du réservoir de gaz (2) est pourvue à l'extérieur d'ailettes de refroidissement (19) qui sont de préférence perpendiculaires à l'axe longitudinal.

9. Dispositif selon l'une des revendications précédentes, caractérisé en ce que les surfaces intérieures d'au moins un réservoir de gaz (2) sont revêtues d'un catalyseur (20) et/ou que le catalyseur remplit le volume de ce réservoir de gaz (2).

10. Dispositif selon la revendication 9, caractérisé en ce que le catalyseur (20) est du platine ou un composé dioxyde de manganèse-protoxyde de cuivre.

11. Dispositif selon l'une des revendications précédentes, caractérisé en ce que des filtres de nettoyage, par exemple électrostatiques, des pièges de refroidissement et/ou des filtres électriques, sont montés dans le passage du gaz.

Fig. 1

Fig. 2

Fig. 3

Fig. 4

Fig. 5

Fig. 6

Fig. 7

Fig. 8

Fig. 9

0 059 229

Fig. 10

0 059 229

Fig. 11

Fig..12

Fig. 13